(19) Europäisches Patentamt / European Patent Office / Office européen des brevets

(11) **EP 3 710 349 B1**

(12) **FASCICULE DE BREVET EUROPEEN**

(45) Date de publication et mention de la délivrance du brevet:
**17.03.2021 Bulletin 2021/11**

(21) Numéro de dépôt: **18801019.3**

(22) Date de dépôt: **22.10.2018**

(51) Int Cl.:
**B63B 25/16** $^{(2006.01)}$

(86) Numéro de dépôt international:
**PCT/FR2018/052616**

(87) Numéro de publication internationale:
**WO 2019/097131 (23.05.2019 Gazette 2019/21)**

(54) **MAT D'EVACUATION DE GAZ**

GASENTLADUNGSMAST

GAS DISCHARGE MAST

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **16.11.2017 FR 1760816**

(43) Date de publication de la demande:
**23.09.2020 Bulletin 2020/39**

(73) Titulaire: **Gaztransport et Technigaz**
**78470 Saint Rémy les Chevreuse (FR)**

(72) Inventeurs:
• **SPITTAEL, Laurent**
**78470 Saint Remy Les Chevreuse (FR)**
• **PELTIER, Sylvestre**
**78470 Saint Remy Les Chevreuse (FR)**

• **HOUEL, Pierre**
**78470 Saint Remy Les Chevreuse (FR)**

(74) Mandataire: **Loyer & Abello**
**9, rue Anatole de la Forge**
**75017 Paris (FR)**

(56) Documents cités:
    EP-A1- 3 138 767      KR-A- 20140 079 900
    KR-A- 20150 047 320   KR-A- 20160 052 116

• **Classnk: "OUTLINE OF LIQUEFIED GAS CARRIERS", , 31 janvier 2002 (2002-01-31), page 76 pp., XP055109482, Extrait de l'Internet: URL:https://www.classnk.or.jp/account/en/R ules_Guidance/ssl/download.aspx?type=pdf&f ile_name=outline_of_liquefied_gas_carrier_ e [extrait le 2014-03-24]**

## Description

## Domaine technique

L'invention se rapporte au domaine des mâts d'évacuation de gaz pour installation de stockage de gaz liquéfié, notamment du gaz naturel liquéfié, et plus particulièrement pour les navires de transport de gaz liquéfié, par exemple les méthaniers.

## Arrière-plan technologique

Le gaz naturel liquéfié est généralement stocké dans une cuve sous forme liquide à une pression voisine de la pression atmosphérique et à une température d'environ -163°C, un navire méthanier pouvant contenir plusieurs cuves de GNL. Chaque cuve est généralement reliée à un mât d'évacuation sur le pont supérieur du navire pour permettre l'échappement du GNL évaporé qui autrement engendrerait une surpression inadmissible dans la cuve. Lors de l'échappement à travers le mât, le gaz passe au travers du corps du mât puis au niveau de la tête de mât par une ouverture d'échappement qui permet au gaz de s'évacuer vers l'atmosphère. Cependant, un des inconvénients majeurs de cette ouverture d'échappement est qu'elle permet à l'eau de pluie ou tout autre déchet de s'infiltrer à travers celle-ci et donc d'entrer à l'intérieur du mât d'évacuation. Il est donc nécessaire de vidanger régulièrement le mât pour éviter que l'eau ne s'accumule dans le mât et ainsi perturbe l'évacuation du gaz Le document KR 2015 0047320

A est considéré comme l'état de la technique le plus proche et divulgue le préambule de la revendication 1.

## Résumé

Une idée à la base de l'invention est donc d'empêcher l'eau de pluie ou de mer de pénétrer à l'intérieur du mât, en l'évacuant au niveau de la tête de mât. En effet, l'eau de pluie entraînant des effets néfastes sur le mât d'évacuation et son efficacité à évacuer le gaz, il est possible de prévoir des moyens permettant de détourner l'eau de pluie de l'intérieur du mât et/ou des moyens d'évacuation de l'eau, par exemple des trous au niveau de la partie inférieure de la tête de mât, pour évacuer l'eau qui aurait pénétré dans la tête de mât.

Cependant, il est également nécessaire d'éviter que le gaz soit évacué de manière trop importante par ces moyens d'évacuation car il y aurait des risques de projection de gaz vers le bas de l'installation de stockage où se trouvent les opérateurs. Un avantage de l'invention est de limiter ces risques liés à la projection de gaz depuis la tête de mât vers le bas de l'installation de stockage où se trouvent les opérateurs, tout en continuant à évacuer efficacement l'eau de pluie de la tête de mât.

Selon un mode de réalisation, l'invention fournit un mât d'évacuation de gaz pour un navire, dans lequel le mât comprend un corps de mât et une tête de mât disposée à une extrémité du corps de mât, le corps de mât et la tête de mât étant des structures tubulaires creuses comportant chacune une paroi latérale, la tête de mât comprenant une partie inférieure relié au corps de mât et une partie supérieure comportant une ouverture permettant d'évacuer le gaz, le corps de mât présentant une portion d'extrémité supérieure engagée dans l'espace intérieur de la tête de mât à travers une extrémité inférieure de la tête de mât, la portion d'extrémité supérieure du corps de mât présentant une dimension extérieure en section transversale plus petite que la dimension intérieure en section transversale de la partie inférieure de la tête de mât, la tête de mât comprenant également :

- un système de détournement d'eau qui est fixé par des éléments de montage à la tête de mât en face de l'ouverture dans la direction longitudinale du mât pour détourner à distance du corps de mât un flux d'eau se dirigeant vers ou provenant de l'ouverture dans la direction longitudinale du mât ;
- une plaque de liaison périphérique s'étendant entre la surface extérieure de la portion d'extrémité supérieure du corps de mât et la surface intérieure de la partie inférieure de la tête de mât pour collecter un flux d'eau résiduel ruisselant sur la surface intérieure de la tête de mât, la plaque de liaison périphérique étant munie d'au moins une perforation pour évacuer le flux d'eau résiduel à l'extérieur du mât.

Ainsi, le mât d'évacuation permet d'évacuer efficacement le gaz tout en évitant que l'eau de pluie ne pénètre dans le corps du mât grâce au système de détournement d'eau et à la perforation de la plaque de liaison situés au niveau de la tête de mât. De plus, la plaque de liaison périphérique a pour avantage de limiter la section ouverte dans la partie inférieure de la tête de mât et ainsi limiter la quantité éventuelle de gaz qui pourrait s'évacuer par la partie inférieure et pourrait être dangereux pour les opérateurs travaillant par exemple sur le pont supérieur du navire.

Le système de détournement permet tout d'abord de détourner un flux principal d'eau qui pénétrerait dans la direction longitudinale de l'ouverture de la tête de mât pour ainsi protéger l'intérieur du mât d'évacuation de la plus grande quantité d'eau de pluie et ainsi limiter ou éviter tout besoin de vidange du mât d'évacuation qui est une opération couteuse et complexe. L'invention permet donc d'éviter ou du moins limiter cette étape de vidange et de simplifier l'entretien des mâts d'évacuation.

Si le flux principal est bien détourné de l'intérieur du mât par le système de détournement, il peut rester toutefois un flux résiduel d'eau de pluie qui n'a pas été affecté par le système de détournement et qui ruisselle le long de la surface interne de la tête de mât, c'est pourquoi le système comprend une perforation au niveau de la partie inférieure de la tête de mât, la perforation permettant d'évacuer le flux d'eau résiduel à l'extérieur du mât.

De plus, le fait que la perforation soit ménagée dans une plaque de liaison périphérique présente un avantage. En effet, lors de l'évacuation de gaz important par le mât d'évacuation, un flux résiduel de gaz peut être amené à prendre la trajectoire menant à la partie inférieure de la tête de mât. Si ce flux était amené à être évacué à ce niveau en trop grande quantité, il serait dangereux pour les opérateurs car il serait dirigé vers les opérateurs se trouvant en dessous du mât, il est donc avantageux de contrôler ce flux résiduel de gaz. Ainsi, la plaque de liaison périphérique permet de limiter ce flux résiduel de gaz en le limitant au passage de la perforation de la plaque de liaison.

Selon des modes de réalisation, un tel mât d'évacuation de gaz peut comporter une ou plusieurs des caractéristiques suivantes.

Selon un mode de réalisation, les parties supérieure et inférieure de la tête de mât sont de forme tronconique convergente et divergente dans le sens du flux de gaz.

Selon un mode de réalisation, la tête de mât et le corps de mât sont en acier inoxydable.

Selon un mode de réalisation, la paroi latérale de la portion inférieure de la tête de mât et la plaque de liaison forment une gouttière entourant la portion d'extrémité supérieure du corps de mât.

Grâce à ces caractéristiques, le flux résiduel est non seulement évacué au niveau de la gouttière par la perforation mais également une quantité d'eau peut être contenue dans la gouttière qui sert alors de réservoir pour laisse le temps à l'eau de s'évacuer par la perforation en cas de surplus. En effet, selon la quantité d'eau reçue du flux résiduel d'eau par la gouttière, il est possible que la perforation ne suffise pas à évacuer de manière immédiate l'eau, la gouttière présente donc l'avantage de contenir l'eau en attente d'évacuation par la perforation.

Selon des modes de réalisation, le système de détournement peut être situé à l'intérieur ou à l'extérieur de la tête de mât. Selon un mode de réalisation, le système de détournement comporte un dispositif de récupération d'eau, de préférence sous la forme d'un entonnoir, et un dispositif de drainage, de préférence sous la forme d'un tuyau, permettant de vider le dispositif de récupération à l'extérieur de la tête de mât.

Selon un mode de réalisation, le dispositif de drainage est incliné d'un angle non nul par rapport à l'horizontal de manière à permettre l'évacuation de l'eau du dispositif de récupération, de préférence l'angle mesure 15°.

Lorsqu'il est placé à l'intérieur de la tête de mât, le dispositif de récupération permet la récupération efficace de toute l'eau venant du flux principal d'eau et qui est rentrée par l'ouverture de la partie supérieure de la tête. De plus, par sa forme en entonnoir, il permet de rassembler l'eau naturellement en son centre pour faciliter son évacuation. L'eau peut alors être acheminée via le dispositif de drainage en forme de tuyau hors de la tête de mât. La forme du dispositif de drainage permet à l'eau d'être évacué de manière étanche tout en prenant peu de place dans la tête de mât ce qui évite que le dispositif de drainage nuise à l'évacuation de gaz.

Selon un mode de réalisation, le système de détournement est situé au-dessus ou en-dessous et à distance de l'ouverture, le système de détournement présentant une dimension extérieure en section transversale supérieure à la dimension en section transversale de l'ouverture. De préférence, le système de détournement comporte une plaque bombée ou est en forme de cône.

Le système de détournement ainsi conçu dans ce mode de réalisation permet au système de directement détourner le flux principal d'eau dirigé vers ou provenant de l'ouverture. En effet, le système joue ici le rôle de toit au-dessus ou en-dessous de l'ouverture empêchant l'eau de passer directement par l'ouverture ou empêchant l'eau passée par l'ouverture d'atteindre le corps de mât.

Selon un mode de réalisation, la tête et le corps de mât sont fixés l'un à l'autre par l'intermédiaire de supports de fixation plats répartis tout autour de la surface interne de la tête de mât et s'étendant entre la surface interne de la tête de mât et la surface externe du corps de mât.

Grâce à ces caractéristiques, la tête de mât et le corps de mât sont fermement fixés l'un à l'autre par les supports de manière à garantir la stabilité de la liaison et ainsi permettre au mât de supporter les efforts soumis à son utilisation sur un navire de transport de gaz. De plus, les supports de fixation peuvent être fixés par soudage à la tête de mât et au corps de mât.

Selon un mode de réalisation, les supports de fixation s'étendent parallèlement à la direction longitudinale du mât, les supports de fixation étant configurés pour délimiter différents segments de gouttière, la communication fluidique entre les différents segments de gouttière étant assurée par des orifices de support ménagés dans les supports de fixation.

Les orifices de support permettent donc d'éviter que certains segments qui dans une configuration n'aient pas de perforation, de se remplir sans pouvoir évacuer l'eau qui s'y accumulerait. En effet, les orifices de supports permettent alors à tous les segments de communiquer entre eux, il n'est donc pas nécessaire d'avoir une perforation au niveau de chaque segment de la gouttière.

Selon un mode de réalisation, les orifices de support sont situés à une extrémité inférieure des supports de fixation.

Selon un mode de réalisation, les supports de fixation sont au nombre de huit.

La répartition des supports de fixation permet de partager la charge et les contraintes appliquées à chaque support de manière à augmenter leur durée de vie et rendre la structure plus stable.

Selon un mode de réalisation, les éléments de montage sont des barres plates, de préférence au nombre de huit réparties tout autour de la surface interne de la tête de mât et orientées parallèlement à la direction longitudinale du mât.

La répartition des éléments de montage permet de partager la charge et les contraintes appliquées à chaque élément de manière à augmenter leur durée de vie et rendre la structure plus stable. De plus, la forme en barre plate parallèle à la direction longitudinale a pour avantage d'éviter le plus possible de perturber l'évacuation de gaz en prenant peu de place en épaisseur.

Selon un mode de réalisation, la tête de mât comprend une grille située au niveau de l'ouverture de la partie supérieure de la tête de mât de manière à filtrer le flux d'eau se dirigeant vers l'ouverture.

La grille permet d'éviter que tout déchet plus grand que l'espacement de la grille ne rentre dans le mât d'évacuation. De plus, elle permet également d'éviter un phénomène de retour de flamme à l'intérieur du mât pouvant endommager le mât d'évacuation.

Selon un mode de réalisation, la tête de mât comporte un paramètre d'ouverture inférieure P défini

$$\mathbf{P} = \frac{S1}{S2} ,$$

par l'équation suivante :    avec S1 représentant la superficie totale, c'est-à-dire cumulée, de l'au moins une perforation de la plaque de liaison périphérique et S2 représentant la superficie totale de l'ouverture de la partie supérieure de la tête de mât ; le paramètre d'ouverture inférieure P permettant de quantifier la taille de l'ouverture inférieure par rapport à l'ouverture de la partie supérieure de la tête de mât, ce paramètre P étant inférieur ou égal à 0,01.

Selon un mode de réalisation, le paramètre d'ouverture P est inférieur ou égal à 0,005.

De préférence, la superficie totale S1 de la ou des perforations est supérieure ou égale à 0,5 cm$^2$ et la superficie S2 de l'ouverture de la partie supérieure de la tête de mât est supérieure ou égale à 150 cm$^2$.

Le paramètre d'ouverture inférieure permet de quantifier clairement dans quelle mesure l'ouverture inférieure de la tête de mât est réduite par rapport à l'ouverture de la partie supérieure de la tête de mât.

Selon un mode de réalisation, la tête de mât comprend trois plaques de liaison périphériques réparties tout autour de la tête de mât, les plaques étant chacune munie d'au moins une perforation et étant chacune fixée l'une à l'autre de manière à ce que la paroi latérale de la portion inférieure de la tête de mât et les plaques de liaison forment une gouttière entourant la portion d'extrémité supérieure du corps de mât.

Ces caractéristiques permettent de faciliter le montage des plaques, car le montage de plusieurs plaques de liaison s'étendant sur une portion du contour du corps de mât est plus aisé que le montage d'une seule grande plaque tout autour du corps de mât.

Selon un mode de réalisation, l'invention fournit aussi un navire pour le transport d'un produit liquide froid, le navire comportant une double coque, une cuve disposée dans la double coque et au moins un mât d'évacuation de gaz selon l'invention relié à la cuve, l'au moins un mât étant situé sur un pont supérieur du navire et permettant d'évacuer du gaz vers l'atmosphère en cas de surpression dans la cuve.

**Brève description des figures**

L'invention sera mieux comprise, et d'autres buts, détails, caractéristiques et avantages de celle-ci apparaîtront plus clairement au cours de la description suivante de plusieurs modes de réalisation particuliers de l'invention, donnés uniquement à titre illustratif et non limitatif, en référence aux dessins annexés.

- **La figure 1** représente une vue de côté d'un navire transportant du gaz naturel liquéfié équipé de mâts d'évacuation.

- **La figure 2** représente une vue de dessus d'une tête de mât comprenant un système de détournement selon un premier mode de réalisation.

- **La figure 3** représente une vue en coupe d'une tête de mât selon le plan AA de la figure 2.

- **La figure 4** représente une vue schématique d'une tête de mât comprenant un système de détournement selon un deuxième mode de réalisation

- **La figure 5** est une vue de face d'un élément de montage.

- **La figure 6** est une vue de face d'un support de fixation munie d'un orifice de support.

- **La figure 7** est une vue de côté d'un support de fixation munie d'un orifice de support.

- **La figure 8** représente une vue de dessus d'une plaque de liaison périphérique munie d'une perforation

- **La figure 9** représente une simulation de la circulation du gaz d'un mât d'évacuation selon un mode de réalisation.

- **La figure 10** est une représentation schématique écorchée d'une cuve de navire méthanier et d'un terminal de chargement/déchargement de cette cuve, le navire étant équipé de mâts d'évacuation.

**Description détaillée de modes de réalisation**

Dans la description et les revendications, les termes « supérieur », inférieur », « dessus » et « dessous » doivent interpréter selon la direction longitudinale du mât, et dans le sens du corps de mât vers la tête de mât.

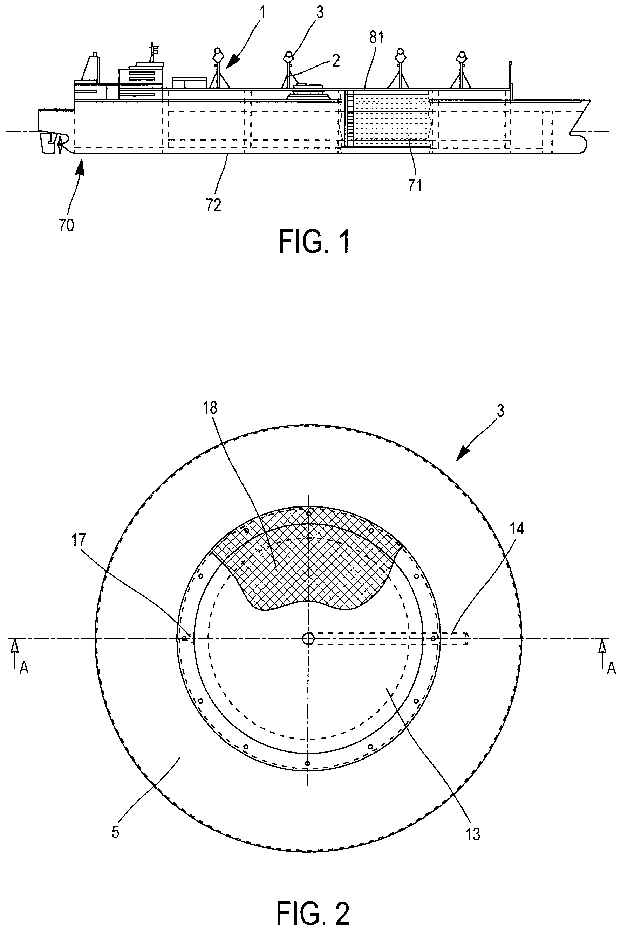

La figure 1 représente un navire 70 de transport de gaz naturel liquéfié (GNL) qui comporte plusieurs cuves 71 montées dans la coque 72 du navire 70. Le GNL stocké dans les cuves s'évapore de manière continue augmentant progressivement la pression à l'intérieur des cuves 71, ce qui crée dans la cuve une phase liquide et une phase gazeuse.

Pour éviter d'endommager les cuves 71 et pour éviter tout risque de fuite, une soupape de surpression est agencée au niveau de chaque cuve 71. Cette soupape est fermée par défaut et s'ouvre sous la commande d'un pilote de soupape lorsque la pression à l'intérieure de la cuve dépasse une valeur prédéterminée. Une partie du gaz est alors évacué hors de la cuve, il peut être alors soit utilisé par le navire pour son système de propulsion, soit directement évacué vers l'atmosphère via des mâts d'évacuation 1 situés sur le pont supérieur 81 du navire 70 et qui sont reliés à la cuve 71 via la soupape de surpression.

Un mât d'évacuation est composé d'un corps de mât 2 et d'une tête de mât 3. Le corps de mât 2 est formé d'une structure tubulaire creuse comprenant une paroi latérale de corps 4. De la même manière, la tête de mât est formée d'une structure tubulaire creuse comprenant une paroi latérale de tête 5. Le gaz qui est évacué via les mâts d'évacuation passe alors tout d'abord par le corps de mât 2 puis par la tête de mât 3 qui comporte une ouverture 10 communiquant avec l'atmosphère, le gaz étant évacué via cette ouverture 10.

Les mâts d'évacuation 1 sur un navire 70 transportant du GNL, par exemple un méthanier, ou toute installation de stockage de GNL, sont suffisamment hauts pour permettre au gaz s'échappant de la tête de mât 3 d'être éloigné du pont supérieur 70 ou du sol respectivement, pour des raisons de sécurité. En effet, des opérateurs pouvant être présents sur le pont supérieur 70, il est nécessaire pour leur sécurité que le gaz soit évacué suffisamment loin du pont 81. Par exemple, sur un méthanier, les mâts d'évacuation 1 font en général plus de dix mètres de hauteur.

Lors de pluie, de tempête ou tout autre événement permettant à l'eau d'entrer via l'ouverture de la tête de mât 3, l'eau est amenée à rentrer à l'intérieur du mât d'évacuation 1. Cette infiltration d'eau peut engendrer plusieurs problèmes, d'une part l'eau de pluie peut empêcher une évacuation du gaz efficace en s'accumulant à l'intérieur du mât, d'autre part l'eau de pluie peut endommager le mât de l'intérieur, et enfin elle peut contraindre à effectuer des opérations de vidange du mât pour évacuer l'eau accumulée ce qui est une opération assez complexe et coûteuse. Il est donc nécessaire d'installer des moyens permettant d'empêcher toute infiltration d'eau de pluie dans le mât d'évacuation 1. Pour éviter que l'eau ne s'infiltre dans le corps du mât 2 ou plus loin dans le système d'évacuation de gaz relié à la cuve, il est possible d'installer ces moyens directement sur la tête de mât 3.

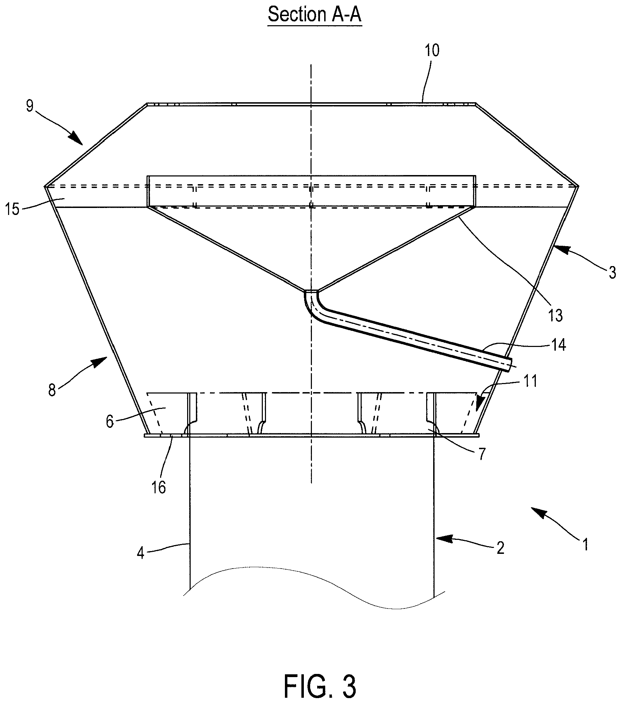

Le mât 1 et notamment la tête de mât 3 est représentée sur les figures 2 et 3 selon un premier mode de réalisation où l'on peut distinguer les différents éléments constitutifs de la tête 3. La tête de mât 3 est composée d'une partie inférieure 8 et d'une partie supérieure 9, ces parties étant de forme tronconique. Ces deux parties tronconiques sont assemblées l'une avec l'autre à leur extrémité où leur diamètre est le plus élevé, de manière à ce que la tête assemblée est un diamètre plus important au niveau de l'assemblage des deux parties supérieure 9 et inférieure 8. La tête de mât 3 est équipée ici de deux moyens permettant à la tête d'évacuer l'eau de pluie hors du mât d'évacuation 1.

De plus, comme représenté sur la figure 3, la tête de mât 3 comporte une grille 18 située au niveau de son ouverture 10. Cette grille 18 a ici deux utilités. Elle permet tout d'abord d'éviter que tout déchet plus grand que l'espacement de la grille 18 ne rentre dans le mât d'évacuation. De plus, elle permet également d'éviter un phénomène éventuel, de retour de flamme à l'intérieur du mât pouvant endommager le mât d'évacuation 1.

Selon ce mode de réalisation, le premier moyen est un système de détournement 12 comprenant un dispositif de récupération 13 et un dispositif de drainage 14. Le dispositif de récupération 13 est fixé à la paroi latérale 5 de la tête de mât 3 par des éléments de montage 15. Ces éléments de montage 15 sont répartis équitablement sur la tête de mât 3 pour permettre au dispositif de récupération 13 d'être fixé de manière optimale.

Le dispositif de récupération 13 est dans cette configuration situé à l'intérieur de la tête de mât 3 de manière à récupérer une grande partie de l'eau qui se serait infiltré à l'intérieur de la tête de mât par le flux principal d'eau venant dans une direction longitudinale au niveau de l'ouverture. De plus, le dispositif de récupération 13 est situé à distance de l'ouverture 10 pour libérer un passage où le gaz peut s'évacuer. De manière à gêner le moins possible l'évacuation du gaz, la tête de mât 3 a une section plus importante au niveau où est situé le dispositif de récupération 13 de manière à ce que le gaz puisse s'évacuer malgré la présence du dispositif de récupération 13 sur sa trajectoire. Le dispositif de récupération 13 possède un axe de révolution et a un diamètre extérieur au niveau de ces fixations avec les éléments de montage égal au diamètre de l'ouverture 10 de manière à rendre optimal la récupération de l'eau de pluie en gênant le moins possible l'évacuation du gaz.

Sur la figure 3 qui représente un mode de réalisation du mât d'évacuation 1, il est possible de distinguer la forme du dispositif de récupération à savoir une forme d'entonnoir qui est situé au centre de la tête de mât 3, la partie la plus ouverte de l'entonnoir étant proche de l'ouverture 10, la partie la plus fermée étant relié au dispositif de drainage 14 de manière à évacuer l'eau accumulée dans le dispositif de récupération 13.

Le dispositif de drainage 14 est dans le mode présenté à la figure 3, sous la forme d'un tuyau reliant le dispositif de récupération 13 à l'extérieur de la tête de mât 3 ce qui permet d'évacuer efficacement l'eau accumulée dans le dispositif de récupération 13. Le dispositif de drainage 14 traverse donc la paroi latérale de tête 5 dans sa partie inférieure 8 pour déboucher à l'extérieur de la tête de mât 3. Le dispositif de drainage 14 est également inclinée d'un angle non nul par rapport à l'horizontal de manière à permettre l'évacuation de l'eau du dispositif de récupération 13 naturellement.

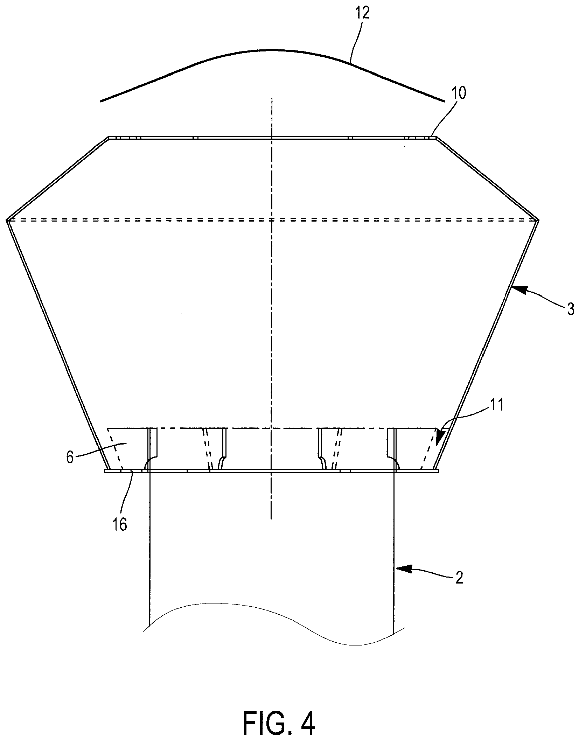

La partie inférieure 8 de la tête de mât 3 est fixée au corps de mât 2 par l'intermédiaire de supports de fixation 6 visibles en figure 4. De la même manière que les éléments de montage 15, les supports de fixation 6 sont répartis équitablement sur le pourtour de la tête de mât 3 de manière à rendre la fixation entre la tête 3 et le corps 2 robuste et stable. De plus, le corps de mât 2 présente une portion d'extrémité supérieure engagée dans l'espace intérieur de la tête de mât 3 à travers une extrémité inférieure de la tête de mât 3, la portion d'extrémité supérieure du corps de mât 2 présente une dimension extérieure en section transversale plus petite que la dimension intérieure en section transversale de la partie inférieure de la tête de mât 3 permettant ainsi à la tête de mât 3 d'être assemblée sur la paroi latérale 4 du corps de mât 2. La tête de mât 3 recouvre ainsi partiellement le corps de mât 2. Les supports de fixation 6 créent ainsi un écart entre l'extrémité inférieure de la partie inférieure 8 de la tête de mât 3 et le corps de mât 2, cet écart représentant une des longueurs des supports de fixation 6. L'écart ainsi créé est volontaire car il représente en partie le deuxième moyen d'évacuation.

La tête de mât 3 comprend également une plaque de liaison périphérique 16 s'étendant entre la surface extérieure de la portion d'extrémité supérieure du corps de mât 2 et la surface intérieure de la partie inférieure de la tête de mât 3 pour collecter un flux d'eau résiduel ruisselant sur la surface interne de la tête de mât 3, la plaque de liaison périphérique 16 étant munie d'une perforation 17 pour évacuer le flux d'eau résiduel à l'extérieur du mât 1. La paroi latérale de la portion inférieure de la tête de mât 3 et la plaque de liaison 16 forment ainsi une gouttière 11 entourant la portion d'extrémité supérieure du corps de mât 2.

La gouttière 11 que l'on peut voir figure 3 est donc située entre les supports de fixation 6 où se trouve l'écart entre la tête de mât 3 et le corps de mât 2. Elle permet d'évacuer toute l'eau qui n'aurait pas été récupérée par le système d'évacuation 12 et qui ruissèlerait sur les parois internes de la tête de mât 3 via la perforation 17. De cette manière, les deux moyens d'évacuation d'eau de pluie agissent de manière complémentaire et permettent d'éviter l'eau de pluie d'atteindre l'intérieur du corps du mât 2.

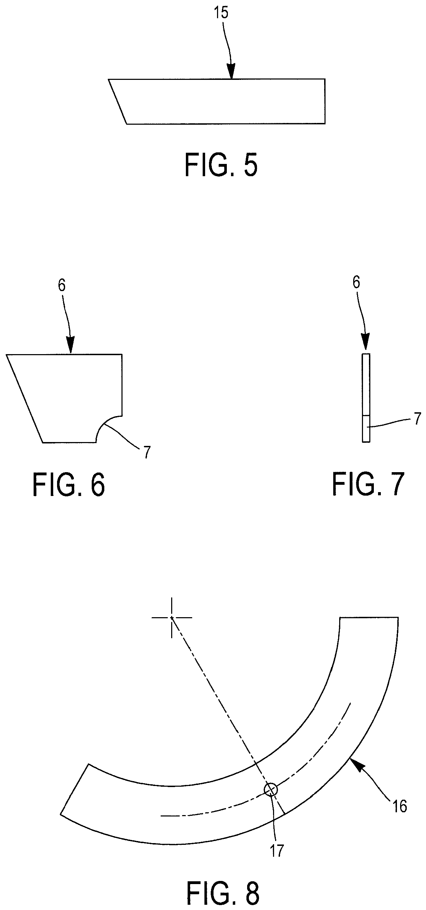

Dans ce mode de réalisation représenté figure 3, les supports de fixation 6 sont au nombre de huit et divise ainsi en huit segments la gouttière 11. De plus, la gouttière 11 est d'une taille suffisante pour permettre de capter toute l'eau qui tomberait entre la tête de mât 3 et le système d'évacuation 12, en cas par exemple de pluie qui aurait une direction autre que la direction longitudinale du mât 1. Cette taille suffisante présente un inconvénient en cas de forte évacuation de gaz qui pourrait avoir lieu lors d'un incident sur l'installation de stockage. En effet, dans ce cas-là, un flux résiduel de gaz peut s'évacuer par la gouttière 11 car le flux a alors une vitesse importante et en percutant le système de détournement 12, il peut prendre la direction de la gouttière 11, comme visible sur la figure 8 qui représente une simulation de la circulation du gaz lorsque l'invention est soumise à une forte évacuation de gaz. Le flux résiduel est alors orienté vers le bas de l'installation de stockage et présente un danger pour les opérateurs. C'est pourquoi les plaques de liaison 16 ont également pour rôle de limiter ce flux résiduel en ne permettant à celui-ci de passer que par la perforation 17. Le flux résiduel est alors considérablement amoindri et ne présente plus un danger pour les opérateurs.

La figure 4 représente une vue schématique d'un mât d'évacuation comprenant un système de détournement selon un deuxième mode de réalisation. Dans ce mode de réalisation, le système de détournement 12 est situé au-dessus et à distance de l'ouverture. Le système 12 est donc ici situé à l'extérieur de la tête de mât 3. Le système de détournement 12 présente une dimension extérieure en section transversale supérieure à la dimension en section transversale de l'ouverture 10 permettant ainsi au système d'avoir la fonction équivalente à une toiture d'un édifice. Contrairement au premier mode de réalisation, le deuxième mode de réalisation permet de détourner le flux principal d'eau avant son entrée dans la tête de mât 3 Le système de détournement 12 peut être par exemple une plaque bombée ou un élément en forme de cône. Le système de détournement 12 peut être fixé à la tête de mât via des éléments de montage 15 qui viendrait fixer les extrémités du système 12 à la paroi latérale 5 extérieure de la tête de mât 3.

La figure 5 représente un élément de montage 15 qui permet la fixation du système de détournement 12 à la tête de mât 3. L'élément de montage 15 est en forme de barre plate. L'extrémité de l'élément de montage 15 qui est en contact avec la tête de mât est inclinée de manière à faciliter sa fixation à la tête de mât qui est composé de deux parties tronconiques.

Les figures 6 et 7 représentent un support de fixation 6. Dans le mode de réalisation représenté, le support de fixation 6 est muni d'un orifice de support 7 qui permet à l'eau contenue dans un premier segment de la gouttière 11 de pouvoir s'écouler dans un deuxième segment de gouttière 11, les deux segments étant séparés par le support de fixation 6. L'orifice de support 7 permet donc d'éviter que certains segments qui dans une configuration n'aurait pas de perforation 17, de se remplir sans pouvoir évacuer l'eau qui s'y accumulerait.

La figure 8 représente une plaque de liaison périphérique 16 munie d'une perforation 17. Dans le mode de réalisation présenté, la plaque de liaison 16 est en forme d'arc de cercle de manière à lorsqu'elle est assemblée à d'autres plaques de liaison 16 formée une plaque de forme annulaire.

Exemple dimensionnel

Dans un mode de réalisation, le mât 1 peut présenter les dimensions suivantes :

> Diamètre de l'ouverture 10 de la partie supérieure : 700mm
> Diamètre de la jonction des parties supérieure et inférieure : 1300mm
> Diamètre de l'extrémité inférieure de la partie inférieure : 800mm
> Diamètre du corps de mât 2 : 610mm
> Diamètre du dispositif de récupération d'eau 13 : 800mm
> Hauteur de la partie supérieure : 200mm
> Hauteur de la partie inférieure : 600mm
> Hauteur de la gouttière 11 : 100mm
> Largeur de la plaque de liaison 16 : 105mm
> Nombre de perforations 17 : 3
> Diamètre d'une perforation 17 : 25mm

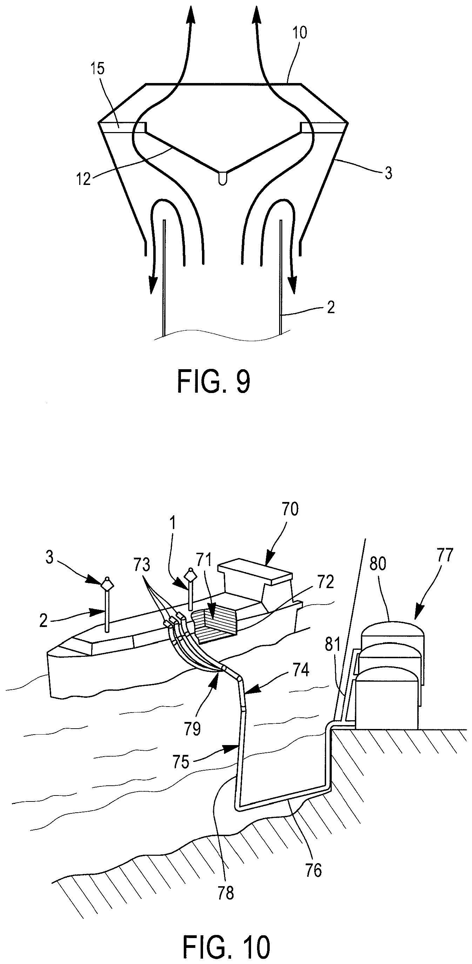

La figure 9 représente une simulation de la circulation du gaz d'un mât d'évacuation 1. Cette figure illustre un schéma d'un mât d'évacuation 1 dans une version simplifiée où il est possible de distinguer le flux principal de gaz qui vient du corps du mât 2 et se dirige vers l'ouverture 10 de la partie supérieure de la tête de mât 3 ainsi que le flux résiduel qui vient du corps de mât 2 et se dirige vers l'ouverture de la partie inférieure de la tête de mât 3 où est normalement disposé la plaque de liaison 16. La plaque 16 a donc pour rôle de bloquer ce flux résiduel de gaz tout en laissant s'évacuer le flux résiduel d'eau par la perforation 17.

En référence à la figure 10, une vue écorchée d'un navire méthanier 70 montre une cuve étanche et isolée 71 de forme générale prismatique montée dans la double coque 72 du navire. La paroi de la cuve 71 comporte une barrière étanche primaire destinée à être en contact avec le GNL contenu dans la cuve, une barrière étanche secondaire agencée entre la barrière étanche primaire et la double coque 72 du navire, et deux barrières isolante agencées respectivement entre la barrière étanche primaire et la barrière étanche secondaire et entre la barrière étanche secondaire et la double coque 72.

De manière connue en soi, des canalisations de chargement/déchargement 73 disposées sur le pont supérieur du navire peuvent être raccordées, au moyen de connecteurs appropriées, à un terminal maritime ou portuaire pour transférer une cargaison de GNL depuis ou vers la cuve 71.

La figure 10 représente un exemple de terminal maritime comportant un poste de chargement et de déchargement 75, une conduite sous-marine 76 et une installation à terre 77. Le poste de chargement et de déchargement 75 est une installation fixe off-shore comportant un bras mobile 74 et une tour 78 qui supporte le bras mobile 74. Le bras mobile 74 porte un faisceau de tuyaux flexibles isolés 79 pouvant se connecter aux canalisations de chargement/déchargement 73. Le bras mobile 74 orientable s'adapte à tous les gabarits de méthaniers. Une conduite de liaison non représentée s'étend à l'intérieur de la tour 78. Le poste de chargement et de déchargement 75 permet le chargement et le déchargement du méthanier 70 depuis ou vers l'installation à terre 77. Celle-ci comporte des cuves de stockage de gaz liquéfié 80 et des conduites de liaison 81 reliées par la conduite sous-marine 76 au poste de chargement ou de déchargement 75. La conduite sous-marine 76 permet le transfert du gaz liquéfié entre le poste de chargement ou de déchargement 75 et l'installation à terre 77 sur une grande distance, par exemple 5 km, ce qui permet de garder le navire méthanier 70 à grande distance de la côte pendant les opérations de chargement et de déchargement.

Pour engendrer la pression nécessaire au transfert du gaz liquéfié, on met en œuvre des pompes embarquées dans le navire 70 et/ou des pompes équipant l'installation à terre 77 et/ou des pompes équipant le poste de chargement et de déchargement 75.

Bien que l'invention ait été décrite en liaison avec plusieurs modes de réalisation particuliers, il est bien évident qu'elle n'y est nullement limitée et qu'elle comprend tous les équivalents techniques des moyens décrits ainsi que leurs combinaisons si celles-ci entrent dans le cadre de l'invention.

L'usage du verbe « comporter », « comprendre » ou « inclure » et de ses formes conjuguées n'exclut pas la présence d'autres éléments ou d'autres étapes que ceux énoncés dans une revendication.

Dans les revendications, tout signe de référence entre parenthèses ne saurait être interprété comme une limitation de la revendication.

**Revendications**

1. Mât d'évacuation de gaz (1) pour un navire (70), dans lequel le mât (1) comprend un corps de mât (2) et une tête de mât (3) disposée à une extrémité du corps de mât (2), le corps de mât (2) et la tête de mât (3) étant des structures tubulaires creuses comportant chacune une paroi latérale (4, 5), la tête de mât (3) comprenant une partie inférieure relié au corps de mât (2) et une partie supérieure comportant une ouverture (10) permettant d'évacuer le gaz, le corps de mât (2) présentant une portion d'extrémité supérieure engagée dans l'espace intérieur de la tête de mât (3) à travers une extrémité inférieure de la tête de mât (3), la portion d'extrémité supérieure du corps de mât (2) présentant une dimension extérieure en section transversale plus petite que la dimension intérieure en section transversale de la partie inférieure de la tête de mât (3), la tête de mât (3) comprenant également :

- un système de détournement d'eau (12) qui est fixé par des éléments de montage (15) à la tête de mât (3) en face de l'ouverture (10) dans la direction longitudinale du mât pour détourner à distance du corps de mât (2) un flux d'eau se dirigeant vers ou provenant de l'ouverture dans la direction longitudinale du mât **caractérisé par**
- une plaque de liaison périphérique (16) s'étendant entre la surface extérieure de la portion d'extrémité supérieure du corps de mât (2) et la surface intérieure de la partie inférieure de la tête de mât pour collecter un flux d'eau résiduel ruisselant sur la surface intérieure de la tête de mât (3), la plaque de liaison périphérique (16) étant munie d'au moins une perforation (17) pour évacuer le flux d'eau résiduel à l'extérieur du mât.

2. Mât d'évacuation (1) selon la revendication 1, dans lequel la paroi latérale de la portion inférieure de la tête de mât (3) et la plaque de liaison (16) forment une gouttière (11) entourant la portion d'extrémité supérieure du corps de mât (2).

3. Mât d'évacuation (1) selon la revendication 1 ou 2, dans lequel le système de détournement (12) est situé à l'intérieur ou à l'extérieur de la tête de mât (3) et comporte un dispositif de récupération d'eau (13), de préférence sous la forme d'un entonnoir, et un dispositif de drainage (14), de préférence sous la forme d'un tuyau, permettant de vider le dispositif de récupération (13) à l'extérieur de la tête de mât (3).

4. Mât d'évacuation (1) selon la revendication 1 ou 2, dans lequel le système de détournement (12) est situé au-dessus ou en-dessous et à distance de l'ouverture (10), le système de détournement (12) présentant une dimension extérieure en section transversale supérieure à la dimension en section transversale de l'ouverture (10), de préférence, le système de détournement (12) comporte une plaque bombée ou est en forme de cône.

5. Mât d'évacuation (1) selon l'une quelconque des revendications précédentes, dans lequel la tête de mât (3) et le corps de mât (2) sont fixés l'un à l'autre par l'intermédiaire de supports de fixation (6) plats répartis tout autour de la surface interne de la tête de mât (3) et s'étendant entre la surface interne de la tête de mât (3) et la surface externe du corps de mât (2).

6. Mât d'évacuation selon les revendications 2 et 5, dans lequel les supports de fixation (6) s'étendent parallèlement à la direction longitudinale du mât, les supports de fixation (6) étant configurés pour délimiter différents segments de gouttière (11), la communication fluidique entre les différents segments de gouttière (11) étant assurée par des orifices de support (7) ménagés dans les supports de fixation (6).

7. Mât d'évacuation (1) selon la revendication 5 ou 6, dans lequel les supports de fixation (6) sont au nombre de huit.

8. Mât d'évacuation (1) selon l'une quelconque des revendications précédentes, dans lequel les éléments de montage (15) sont des barres plates, de préférence au nombre de huit réparties tout autour de la surface interne de la tête de mât (3) et orientées parallèlement à la direction longitudinale du mât.

9. Mât d'évacuation (1) selon l'une quelconque des revendications précédentes, dans lequel la tête de mât (3) comprend une grille (18) située au niveau de l'ouverture (10) de la partie supérieure de la tête de mât (3) de manière à filtrer le flux d'eau se dirigeant vers l'ouverture (10).

10. Mât d'évacuation (1) selon l'une quelconque des revendications précédentes, dans lequel la tête de mât (3) comporte un paramètre d'ouverture inférieure P

$$\mathbf{P} = \frac{S1}{S2},$$

défini par l'équation suivante : avec S1 représentant la superficie totale de l'au moins une perforation (17) de la plaque de liaison périphérique (16) et S2 représentant la superficie totale de l'ouverture (10) de la partie supérieure de la tête de mât (3) ; le paramètre d'ouverture inférieure P permettant de quantifier la taille de l'ouverture inférieure par rapport à l'ouverture (10) de la partie supérieure de la tête de mât (3), ce paramètre P étant inférieur ou égal à 0,01.

11. Mât d'évacuation (1) selon l'une quelconque des revendications précédentes, dans lequel la tête de mât (3) comprend trois plaques de liaison périphériques (16) réparties tout autour de la tête de mât (3), les plaques (16) étant chacune munie d'au moins une perforation (17) et étant chacune fixée l'une à l'autre de manière à ce que la paroi latérale de la portion inférieure de la tête de mât (3) et les plaques de liaison (16) forment une gouttière (11) entourant la portion d'extrémité supérieure du corps de mât (2).

12. Navire (70) pour le transport d'un produit liquide froid, le navire comportant une double coque (72), une cuve (71) disposée dans la double coque et au moins un mât d'évacuation de gaz (1) selon l'une quelconque des revendications précédentes. relié à la cuve, l'au moins un mât étant situé sur un pont supérieur (81) du navire et permettant d'évacuer du gaz vers l'atmosphère en cas de surpression dans la cuve.

**Patentansprüche**

1. Gasentladungsmast (1) für ein Schiff (70), wobei der Mast (1) einen Mastkörper (2) und einen Mastkopf (3), welcher an einem Endabschnitt des Mastkörpers (2) angeordnet ist, umfasst, wobei der Mastkörper (2) und der Mastkopf (3) aus einer Hohlrohrstruktur bestehen, welche jeweils eine Seitenwand (4, 5) umfassen, wobei der Mastkopf (3) ein Unterteil, welches mit dem Mastkörper (2) verbunden ist, und ein Oberteil, umfassend eine Öffnung (10), welche die Entladung des Gases ermöglicht, umfasst, wobei der Mastkörper (2) einen oberen Endabschnitt aufweist, welcher durch ein unteres Ende des Mastkopfes (3) in den Innenraum des Mastkopfes (3) eingreift, wobei der obere Endabschnitt des Mastkörpers (2) im Querschnitt eines Außenabmessungen aufweist, welche kleiner ist, als die Innenabmessung des Querschnittes des Unterteils des Mastkopfes (3), wobei der Mastkopf (3) ebenfalls umfasst:

   - ein Wasserableitsystem (12), welches durch Befestigungselemente (15) mit dem Mastkopf (3) gegenüber der Öffnung (10) in Längsrichtung des Mastes verbunden ist, um einen Wasserstrom zu oder von der Öffnung in Längsrichtung des Mastes beabstandet vom Mastkörper (2) abzuleiten, **gekennzeichnet durch**
   - eine umlaufende Verbindungsplatte (16), welche sich zwischen der Außenfläche des oberen Endabschnittes des Mastkörpers (2) und der Innenfläche des Unterteils des Mastkopfes erstreckt, um den auf dem Unterteil des Mastkopfes (3) fließenden Restwasserstrom zu sammeln, wobei die umlaufende Verbindungsplatte (16) mit mindestens einer Perforation (17) ausgestattet ist, um den Restwasserstrom außerhalb des Mastes abzuleiten.

2. Gasentladungsmast (1) gemäß Anspruch 1, wobei die Seitenwand des Unterteils des Mastkopfes (3) und die Verbindungsplatte (16) eine Rinne (11) bilden, welche den oberen Endabschnitt des Mastkörpers (2) umgibt.

3. Gasentladungsmast (1) gemäß Anspruch 1 oder 2, wobei das Wasserableitsystem (12) im Inneren oder Äußeren des Mastkopfes (3) angeordnet ist und eine Wassersammelvorrichtung (13), vorzugsweise in Form eines Trichters, und eine Drainagevorrichtung (14), vorzugsweise in Form eines Rohres, welche die Leerung der Wassersammelvorrichtung (13) außerhalb des Mastkopfes (3) ermöglicht, umfasst

4. Gasentladungsmast (1) gemäß Anspruch 1 oder 2, wobei das Wasserableitsystem (12) oberhalb oder unterhalb beabstandet von der Öffnung (10) angeordnet ist, wobei das Wasserableitsystem (12) eine Außenabmessungen des Querschnittes aufweist, welche größer ist als die Abmessung des Querschnittes der Öffnung (10), wobei das Wasserableitsystem (12) vorzugsweise eine gewölbte Platte aufweist oder kegelförmig ist.

5. Gasentladungsmast (1) gemäß einem der vorstehenden Ansprüche, wobei der Mastkopf (3) und der Mastkörper (2) mit flachen Befestigungsträgern (6), welche um die Innenfläche des Mastkopfes (3) angeordnet sind und sich zwischen der Innenfläche des Mastkopfes (3) und der Außenfläche des Mastkörpers (2) erstrecken, miteinander verbunden sind.

6. Gasentladungsmast gemäß den Ansprüchen 2 und 5, wobei die Befestigungsträger (6) sich parallel in Längsrichtung des Mastes erstrecken, wobei die Befestigungsträger (6) so konfiguriert sind, dass sie verschiedene Segmente der Rinne (11) begrenzen, wobei die Fluidverbindung zwischen den verschiedenen Segmenten der Rinne (11) durch in den Befestigungsträgern (6) angeordneten Trägeröffnungen (7) gewährleistet ist.

7. Gasentladungsmast (1) gemäß Anspruch 5 oder 6, wobei die Befestigungsträger (6) aus der Anzahl von 8 bestehen.

8. Gasentladungsmast (1) gemäß einem der vorstehenden Ansprüche, wobei die Befestigungselemente (15) flache Stangen sind, vorzugsweise 8 an der Zahl, angeordnet um die Innenfläche des Mastkopfes (3) und parallel zur Längsrichtung des Mastes ausgerichtet.

9. Gasentladungsmast (1) gemäß einem der vorstehenden Ansprüche, wobei der Mastkopf (3) ein Gitter (18) umfasst, welches auf Höhe der Öffnung (10) des Oberteils des Mastkopfes (3) angeordnet ist, um den zur Öffnung (10) hinfließenden Wasserstrom zu filtern.

10. Gasentladungsmast (1) gemäß einem der vorstehenden Ansprüche, wobei der Mastkopf (3) einen unteren Öffnungsparameter P definiert durch folgen-

$$P = \frac{S1}{S2}$$

de Gleichung: aufweist, wobei S1 die Gesamtfläche mindestens einer Perforation (17) der umlaufenden Verbindungsplatte und S2 die Gesamtfläche der Öffnung (10) des oberen Teiles des Mastkopfes (3) darstellt.

11. Gasentladungsmast (1) gemäß einem der vorstehenden Ansprüche, wobei der Mastkopf (3) 3 umlaufende Verbindungsplatten (16) umfasst, welche um den Mastkopf (3) angeordnet sind, wobei die Platten (16) jeweils mit mindestens einer Perforation (17) ausgestattet sind und jeweils miteinander verbunden sind, so dass die Seitenwand des Unterteils des Mastkopfes (3) und die Verbindungsplatten (16) eine, den oberen Endabschnitt des Mastkörpers (2) umlaufende Rinne (11) bilden.

12. Schiff (70) zum Transport einer kalten Flüssigkeit, wobei das Schiff eine Doppelwand (72), ein in der Doppelwand angeordnetes Gefäß (71) und mindestens einen, mit dem Gefäß verbundenen, Gasentladungsmast (1) gemäß einem der vorstehenden Ansprüche umfasst, wobei der mindestens eine Mast auf einer oberen Brücke (81) des Schiffes angeordnet ist und die Entladung des Gases in die Atmosphäre ermöglicht, im Fall eines Überdrucks in dem Gefäß.

**Claims**

1. A gas exhaust mast (1) for a ship (70), in which the mast (1) has a mast body (2) and a mast head (3) arranged at one end of the mast body (2), the mast body (2) and the mast head (3) being hollow tubular structures, each of which has a side wall (4, 5), the mast head (3) having a lower portion linked to the mast body (2) and an upper portion with an opening (10) enabling the gas to be discharged, the mast body (2) having an upper end portion engaged in the internal space of the mast head (3) through a lower end of the mast head (3), the external cross section of the upper end portion of the mast body (2) being smaller than the internal cross section of the lower portion of the mast head (3), the mast head (3) also including:

   - a water diversion system (12) that is fastened by assembly elements (15) to the mast head (3) opposite the opening (10) in the longitudinal direction of the mast to divert water flowing to or from the opening in the longitudinal direction of the mast away from the mast body (2),
   - a peripheral linking plate (16) arranged between the outer surface of the upper end portion of the mast body (2) and the inner surface of the lower portion of the mast head to collect a residual water flow on the inner surface of the mast head (3), the peripheral linking plate (16) having at least one perforation (17) designed to drain the residual water flow out of the mast.

2. The exhaust mast (1) as claimed in claim 1, in which the side wall of the lower portion of the mast head (3) and the linking plate (16) form a gutter (11) surrounding the upper end portion of the mast body (2).

3. The exhaust mast (1) as claimed in claim 1 or 2, in which the diversion system (12) is positioned inside or outside the mast head (3) and has a water recovery device (13), preferably in the form of a funnel, and a drainage device (14), preferably in the form of a tube, enabling the recovery device (13) to be emptied to the outside of the mast head (3).

4. The exhaust mast (1) as claimed in claim 1 or 2, in which the diversion system (12) is positioned above or below and away from the opening (10), the external cross section of the diversion system (12) being greater than the cross section of the opening (10), and the diversion system (12) is preferably a domed plate or is cone shaped.

5. The exhaust mast (1) as claimed in any one of the preceding claims, in which the mast head (3) and the mast body (2) are fastened to one another using flat fastening supports (6) distributed about the entire inner surface of the mast head (3) and arranged between the inner surface of the mast head (3) and the outer surface of the mast body (2).

6. The exhaust mast as claimed in claims 2 and 5, in which the fastening supports (6) are arranged parallel to the longitudinal direction of the mast, the fastening supports (6) being designed to delimit different segments of the gutter (11), fluid communication between the different segments of the gutter (11) being ensured by support orifices (7) formed in the fastening supports (6).

7. The exhaust mast (1) as claimed in claim 5 or 6, in which there are eight fastening supports (6).

8. The exhaust mast (1) as claimed in any one of the preceding claims, in which the assembly elements (15) are flat bars, of which there are preferably eight distributed about the entire inner surface of the mast head (3) oriented parallel to the longitudinal direction of the mast.

9. The exhaust mast (1) as claimed in any one of the preceding claims, in which the mast head (3) includes a grille (18) placed on the opening (10) of the upper portion of the mast head (3) to filter the water flowing towards the opening (10).

10. The exhaust mast (1) as claimed in any one of the preceding claims, in which the mast head (3) has a lower opening parameter P determined by the fol-

lowing equation: $$P = \frac{S1}{S2},$$ where S1 is the total surface area of the at least one perforation (17) in the peripheral linking plate (16) and S2 is the total surface area of the opening (10) of the upper portion of the mast head (3), the lower opening parameter P making it possible to quantify the size of the lower opening in relation to the opening (10) in the upper portion of the mast head (3), this parameter P being equal to or less than 0.01.

11. The exhaust mast (1) as claimed in any one of the preceding claims, in which the mast head (3) has three peripheral linking plates (16) distributed about the entire mast head (3), each plate (16) having at least one perforation (17), the plates being fastened to one another such that the side wall of the lower portion of the mast head (3) and the linking plates (16) form a gutter (11) surrounding the upper end portion of the mast body (2).

12. A ship (70) for transporting a cooled liquid product, the ship having a double hull (72), a tank (71) arranged in the double hull and at least one gas exhaust mast (1), as claimed in any one of the preceding claims, linked to the tank, the at least one mast being positioned on the upper deck (81) of the ship and enabling the gas to be discharged into the atmosphere in the event of excessive pressure in the tank.

FIG. 1

FIG. 2

Section A-A

FIG. 3

FIG. 4

FIG. 5

FIG. 6

FIG. 7

FIG. 8

FIG. 9

FIG. 10

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- KR 20150047320